# EUROPEAN PATENT APPLICATION

(11) **EP 4 733 023 A1**
(43) Date of publication of application: **29.04.2026**
(21) Application number: 24207985.3
(22) Date of filing: 22.10.2024
(51) Int. Cl.: B27N 3/18, B27N 3/20, B27N 5/02, B31B 50/59, B31F 1/00, B27N 3/22, B27N 3/00, B27N 3/04, B27N 5/00, B29C 43/00, B29C 43/04

(54) **PRODUCT FORMING UNIT FOR DRY MANUFACTURING RIGID CELLULOSE PRODUCTS AND METHOD FOR CONTROLLING SUCH PRODUCT FORMING UNIT**

(71) Applicant: Yangi AB, 432 48 Varberg (SE)
(72) Inventor: JOHANSSON, Adam, 432 51 Varberg (SE)
(74) Representative: Brann AB

(57) **Abstract**

The present invention relates to a method and a product forming unit (11) for dry manufacturing rigid cellulose product (2) having essentially non-flat general shape from a cellulose blank (10). The product forming unit (11) comprises a moulding tool having a first mould part (15) and a second mould part (16), and the method comprising the steps of providing the cellulose blank (10) into the moulding tool, closing the moulding tool, pressing the heated cellulose blank (10) between the first mould part (15) and the second mould part (16) of the moulding tool, by applying a forming pressure P in the axial direction of the moulding tool, performing a first step of the opening of the moulding tool by decreasing the applied pressure down to a predetermined pressure level P1 in the range 25 - 15 % of said forming pressure P, performing a second step of the opening of the moulding tool be decreasing the applied pressure from said predetermined pressure level P1 down to at least 5% of the forming pressure P during a time period equal to or more than 0,1 seconds and equal to or less than 2 seconds, performing a third step of the opening of the moulding tool by displacing at least one of the first mould part (15) and the second mould part (16) in the axial direction in relation to each other, away from each other to the open position, and removing the cellulose product (2) from the moulding tool.

## Description

### Technical field of the Invention

The present invention relates in general to the field of method and apparatus for dry manufacturing of rigid cellulose products having non-flat general shape from cellulose blank. Such cellulose products may be used for packaging, storing, transporting and/or displaying other products such as electronics, tools, jewelry, food, dairy products, cosmetics, etc., and/or may be used as single/multiple use disposable articles, such as trays, plates, cups, lids, etc. The method and product forming unit are especially defined to prevent damage to the pressed cellulose products during the pressing of the cellulose products. By cellulose products means products that mainly consists of the cellulose part of organic matter.

The present invention relates specifically to a product forming unit and to a method for controlling such product forming unit, wherein the product forming unit is configured for dry manufacturing rigid cellulose products having essentially non-flat general shape from a cellulose blank, the product forming unit comprising a moulding tool having a first mould part and a second mould part, wherein at least one of the first mould part and the second mould part is displaceable in the axial direction in relation to the other in order to press the cellulose blank therebetween into final shape by applying a forming pressure P in the axial direction of the moulding tool, the product forming unit further comprising heating means for heating the cellulose blank to a forming temperature T.

The method comprises the general steps of providing the cellulose blank into the moulding tool between the first mould part and the second mould part, displacing at least one of the first mould part and the second mould part in the axial direction in relation to each other, towards each other from an open position, pressing the heated cellulose blank between the first mould part and the second mould part, displacing at least one of the first mould part and the second mould part in the axial direction in relation to each other, away from each other towards the open position, and removing the cellulose product from the moulding tool.

Thus, the present invention belongs to the general fields of air/dry-laid cellulose blanks and thermoforming rigid cellulose products.

### Background of the Invention

There are many situations where it is desirable to provide two-dimensional (2D) or three-dimensional (3D) shaped objects made of sustainable materials, such as biomaterials, instead of using plastic/polymer materials. There is a general requirement to decrease the overall use of plastics, in favour of biodegradable materials. A biodegradable material commonly used for packaging and disposable articles is wet moulded pulp based on cellulose fibres. Such wet moulded pulp has the advantage of being considered a sustainable material, since it is produced from biomaterials and can be recycled after use. Wet moulded pulp comprises more or less only water and separated cellulose fibers, and consequently, wet moulded pulp has been popular to use for primary packaging applications (packaging next to the article), for secondary packaging applications (assembly of such primary packages), as well as for manufacturing of disposable articles/products.

One advantage of using wet-forming techniques is that the moulding tool is usually made of a wire netting/cloth that is filled with a wet cellulose slurry and thereafter the cellulose slurry is dried and obtains the shape of the moulding tool. The final rigid cellulose product is easily removed from the wire netting without major risk of damaging the cellulose products.

However, a common disadvantage with all wet-forming techniques is the need for large amounts of water during the preparations of the cellulose pulp and the need for drying during the manufacturing/moulding of the cellulose product, which is a time and energy consuming step leading to low production speed and substantial high investment cost in machines and tooling. Meaning that the wet-forming techniques are not feasible to replace fossil-based alternatives neither in small nor large scale production of rigid cellulose products. Thereto, the aesthetical and mechanical properties of a wet-moulded cellulose product are hard to control with desirable precision, due to un-uniform cellulose pulp and due to the wet moulding manufacturing technique *per se.*

Therefore many actors/companies, starting a few decades ago, have changed their focus and investments towards dry-forming techniques wherein rigid cellulose products are manufactured from separated cellulose fibres that are introduced into a product forming unit in the shape of a dry cellulose blank/web, wherein the cellulose blank is formed/moulded into the shape of the intended cellulose product and wherein the cellulose fibres are bonded to each other using heat and pressure. The dry-forming techniques comprises different steps of generating an air-laid cellulose blank, that is fed into a product forming unit, i.e. thermo-forming press.

The technical field of dry manufacturing rigid cellulose products having essentially non-flat general shape, such as trays, lids, or the like, i.e. wherein the forming/pressing is performed in one step using a moulding tool having a first/male mould part and a second/female mould part configured to cooperate with each other, is well known. However, the sub-technical field of reliably manufacturing the rigid cellulose products and removing them from the moulding tool without enhanced risk of damaging the cellulose products, is still exposed to challenges.

When pressing the heated cellulose blank in the moulding tool and removing the pressed cellulose product from the moulding tool there is a great risk that the cellulose product is damaged, e.g. having internal blisters and/or presents layered/delaminated edges.

Thus, there is a need in the art for a reliable, cheap and unharmful dry-forming technique/process for dry manufacturing rigid cellulose products having non-flat general shape, wherein the pressed cellulose products are protected from becoming damaged during the thermoforming and removal of the pressed cellulose product from the moulding tool.

### Object of the Invention

The present invention aims at obviating the aforementioned and other disadvantages and failings of previously known methods and devices for dry manufacturing rigid cellulose products, and at providing an improved product forming unit and method for dry manufacturing rigid cellulose products having non-flat general shape, wherein the risk of obtaining a damaged cellulose product during the thermoforming and removal of the pressed cellulose product from the moulding tool is minimized or avoided.

A primary object of the present invention is to provide an improved product forming unit for dry forming/manufacturing rigid cellulose products having non-flat general shape and an improved method for controlling such product forming unit, wherein the environmental benefits as well as time and energy saving benefits of conventional dry-forming techniques are maintained. It is another object of the present invention to provide an improved product forming unit for dry forming/ manufacturing rigid cellulose products having non-flat general shape and an improved method for controlling such product forming unit, wherein the pressed cellulose products are protected from becoming damaged during the thermoforming and removal of the cellulose product from the moulding tool.

### Summary of the Invention

According to the invention at least the primary object is attained by means of the initially defined product forming unit and method having the features defined in the independent claims. Preferred embodiments of the present invention are further defined in the dependent claims.

According to one aspect of the present invention, there is provided a method for dry manufacturing rigid cellulose products having essentially non-flat general shape from a cellulose blank using a product forming unit of the initially defined type, wherein the method in addition to the general steps initially defined comprises the steps of:
- performing a first step of the opening of the moulding tool by decreasing the applied pressure down to a predetermined pressure level P1 in the range 25 - 15 % of said forming pressure P,
- performing a second step of the opening of the moulding tool be decreasing the applied pressure from said predetermined pressure level P1 down to at least 5% of the forming pressure P during a time period equal to or more than 0,1 seconds and equal to or less than 2 seconds, and
- performing a third step of the opening of the moulding tool by displacing at least one of the first mould part and the second mould part in the axial direction in relation to each other, away from each other to the open position.

According to another aspect of the present invention, there is provided a product forming unit of the initially defined type, wherein the product forming unit is configured to perform the method described herein above.

Thus, the present invention is based on the insight that it is of uttermost importance to prevent steam explosion/expansion during the opening of the moulding tool. During the thermoforming/pressing of the cellulose product the moisture of the cellulose blank is heated but prevented from transition into gas form due to the high pressure, and when the moulding tool is opened the pressure disappear and the moisture risk to expand rapidly in an uncontrolled manner generating internal blisters in the cellulose product and/or layered/delaminated edges of the cellulose product.

Thus, the inventor has developed an effective and reliable control methodology for preventing or at least minimizing the risk for obtaining damaged cellulose products in connection with the thermoforming and removal of the cellulose product from the moulding tool, by opening the moulding tool in a way preventing uncontrolled steam explosion/expansion.

According to various example embodiments of the present invention, the step of decreasing the applied pressure from the predetermined pressure level P1 down to at least 5% of the forming pressure P during a time period of at least 0,1 seconds and equal to or less than 1 seconds, entails a displacement of at least one of the first mould part and the second mould part in the axial direction in relation to each other a distance equal to or less than 0,05 millimetres.

According to various example embodiments of the present invention, the first step of the opening of the moulding tool by decreasing the applied pressure down to said predetermined pressure level P1, is performed during a time period equal to or less than 1 second, preferably equal to or less than 0,3 seconds.

Further advantages with and features of the invention will be apparent from the following detailed description of preferred embodiments.

### Brief description of the drawings

A more complete understanding of the abovementioned and other features and advantages of the present invention will be apparent from the following detailed description of preferred embodiments in conjunction with the appended drawings, wherein:
- Fig. 1: is a schematic illustration of a production line or apparatus for dry manufacturing rigid cellulose products,
- Fig. 2: is a schematic illustration of a moulding tool, wherein a cellulose blank is provided into the moulding tool between the first/female mould part and the second/male mould part,
- Fig. 3: is a schematic illustration of the moulding tool according to figure 2 during forming/pressing of the cellulose product,
- Fig. 4: is a schematic illustration of the moulding tool according to figures 2 and 3 after the forming/pressing step and the pressed cellulose product is released from the moulding tool,
- Fig. 5: is a schematic illustration of the pressed cellulose product according to figure 4, wherein the scrap area is removed from the final cellulose product,
- Fig. 6: is a schematic illustration of an out-feed device, wherein the out-feed device is inserted into the moulding tool between the first/female mould part and the second/male mould part,
- Fig. 7: is a schematic illustration of the out-feed device according to figure 6, wherein the out-feed device together with the cellulose product are removed from the moulding tool, and
- Fig. 8: is a schematic illustration of an apparatus for dry manufacturing rigid cellulose products, wherein the in-feed device provides the next cellulose blank into the moulding tool at the same time as the out-feed device removes the pressed cellulose product from the moulding tool.

### Detailed description of preferred embodiments of the invention

As used herein, the term "air/dry moulding/forming or air/dry laying/laid" means a well-known method according to which separated cellulose fibres are formed into a cellulose blank/sheet.

In air-laying technique, small/short fibres having a normal length in the range of 0,5 to 70 mm, for instance 1 to 10 mm, are separated and captured by an air stream/flow, and then laid on/applied to a forming mesh/surface, usually using a low pressure at the other side of the mesh/surface. The general terms "air/dry laying" and "air/dry moulding" are used interchangeably herein. The cellulose fibre carrying air flow may be generated by suitable device located upstream and/or downstream the forming mesh/surface.

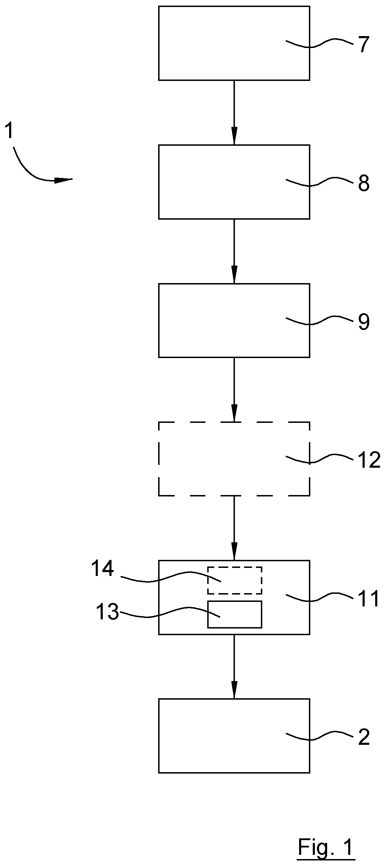

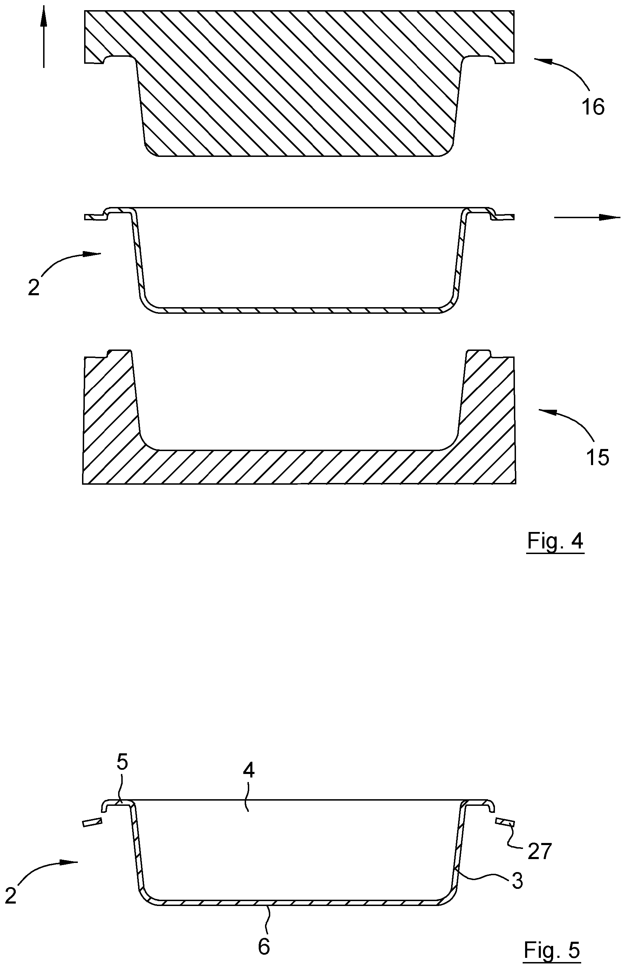

Reference is initially made to figures 1 and 5, wherein figure 1 disclose a schematic illustration of a generic production line/apparatus for dry manufacturing rigid cellulose products, wherein said apparatus is generally designated 1. The production line 1 is configured for manufacturing rigid cellulose products, generally designated 2, having essentially non-flat general shape from separated cellulose fibres. Such a production line 1 may be arranged and set-up according to different well-known ways. Figure 5 disclose an example of a rigid cellulose product/tray 2. The apparatus 1 may have automatic transfer/handling between the different process steps, and/or may have manual transfer/handling between the different process steps, and thereto the apparatus 1 may have intermediate storing and/or additional process steps between the disclosed process steps, and/or the process steps may be located at different sites.

Figure 5 disclose an example of a rigid cellulose product 2 in the shape of a tray/container, wherein the tray is formed using the inventive method. The tray 2 comprises an inclined circumferential wall 3 and an opening 4 defined by a circumferential rim/brim 5 connected to the upper/free end of the wall 3. According to figure 5 embodiment the brim 5 has an angled shape having an essentially radially extending upper surface and a turned-down outer edge, however it shall be pointed out that the cross-section of the brim 5 may have other shapes. The tray 2 may have truncated cone shape having straight wall 3, narrowing in the direction away from the opening 4, in accordance with figure 5 embodiment. The tray 2 may for instance have curved-shaped wall 3 seen in the axial plane. By having inclined walls 3 multiple trays 2 are stackable one inside the other when they are empty. The tray could also be a mug/cup, a lid, packaging or the like container/product. The cross section of the circumferential wall 3 in the radial plane may have any suitable shape, circular, oval, rectangular, polygonal, etc., and may differ in shape and/or dimension along the axial extension of the tray 2. The tray 2 comprises a bottom 6, wherein the bottom 6 is entirely flat or the bottom may comprise local ribs, projections, etc., for strength and rigidity of the cellulose product. The bottom 6 may be located at the very lower end of the wall 3, according to figure 5 embodiment, and/or be partly located at an axial distance from the lower end of the wall 3, or a combination thereof. The circumferential wall 3 is connected to and extends in the axial direction upwards from the bottom portion 6. The general shape of the disclosed tray 2 is also applicable for a lid, plate, cup, etc.

Cellulose raw material 7, i.e. comprising mainly the cellulose part of organic matter, is provided to the production line, and is fed to a separating/disintegrating unit 8 in order to obtain individualized/separated cellulose fibres. The separated cellulose fibres are thereafter transported by an air stream/flow to a dispenser of a cellulose blank/sheet forming unit 9. The cellulose fibres are laid by the dispenser on a moving or stationary perforated surface of the cellulose blank forming unit 9. The cellulose fibre carrying air flow may be generated by suitable device located upstream and/or downstream the perforated surface. Thereafter the generated cellulose blank, generally designated 10, is transported/transferred to a product forming unit 11, whereby rigid cellulose products 2 are formed and discharged from the product forming unit 11.

The cellulose blank forming unit 9 may be configured to generate a continuous cellulose blank/web 10 and/or discontinuous/discrete cellulose blanks 10. Discontinuous/discrete cellulose blanks 10 are fed into the product forming unit 11.

The cellulose raw material 7 may be in the form of reeled pulp or paper, bale of cellulose pulp, paper, etc. and/or sheets of paper, cellulose pulp, etc. In case said cellulose raw material 7 is in the form of sheets and/or reeled pulp or paper, it can be fed directly into the separating unit 8. However, in case said cellulose raw material 7 is in the form of a bale or compact stacks of sheets, etc. one or more shredders and/or one or more additional separating/disintegrating units 8 may be necessary to be used for separating and dosing said cellulose raw material 7 from said bale or sheets in smaller quantities. The shredder(s) prepare cellulose raw material 7 to be accepted by said separating unit 8. The separating unit 8 disintegrates the cellulose raw material 7 into separated cellulose fibres. Said one or plurality of shredder(s) are arranged before said one or a plurality of separating unit(s) 8, so that an output of one of said shredder is connected to an input of one of said separating units 8. The shredders may be arranged in parallel to each other or in series with each other, and the disintegrating units 8 may be arranged in parallel to each other or in series with each other. The shredders and the disintegrating units 8 together constitute a cellulose fibre separating unit, arranged upstream the cellulose blank forming unit 9.

Said cellulose raw material 7 may be constituted by virgin cellulose fibres and/or recycled cellulose fibres and may originate from wood pulps such as kraft pulp, sulphite pulp, mechanical pulp, thermomechanical pulp (TMP), chemical treated mechanical pulp, chemi-thermomechanical pulp (CTMP), and/or from non-wood pulps such as bagasse, bamboo, abaca, hemp, flax, cotton.

The separating unit 8 may according to various embodiments be constituted by a hammer mill. In said separating unit 8 the cellulose raw material is separated into fibres having a normal length in the range of 0,5-70 mm, preferably less than 10 mm. The length of said fibres may be customized by adjusting the internal properties of the separating unit 8 and/or by choosing a different separating unit 8 and/or choosing different cellulose raw material 7. The fibre length for wood pulp is according to various embodiments in the range 0,5-4 mm, preferably in the range 1,7-3,6 mm. According to various embodiments the fibre length for non-wood pulp is in the range 0,5-70 mm.

The production line 1 may comprise a pre-compression and/or imprinting unit 12, located downstream the cellulose blank forming unit 9 and upstream the product forming unit 11. In the pre-compression and/or imprinting unit 12, an air-laid fluffy cellulose blank 10 having a first thickness may be compressed into a cellulose blank 10 having a second thickness, wherein said second thickness is thinner than said first thickness, and/or may be provided with an imprinting pattern. During the pre-compression/imprinting the cellulose blank is made more coherent and easier to handle, since the pre-compression/imprinting generates internal bindings between individual cellulose fibres preventing mutual separation of the cellulose fibres.

The product forming unit 11 comprises a press unit 13, and may optionally comprise a pre-heating unit 14 arranged upstream the press unit 13. According to various example embodiments said cellulose blank 10 may be heated to an elevated temperature before being fed into the press unit 13 of the product forming unit 11. In such embodiment(s) where the cellulose blank 10 is preheated before being fed into the press unit 13, said press unit 13 may or may not comprise heating. According to various example embodiment said press unit 13 may be a heated press unit 13 for heating said cellulose blank 10 during pressing. In the case of a heated press unit 13, preheating of said cellulose blank 10 using a pre-heating unit 14 is optional. According to various example embodiments preheating of the cellulose blank 10 in said pre-heating unit 14 may be combined with a heated press unit 13. Having a pre-heating unit 14 in combination with a heated press unit 13 will speed up the manufacturing process in the product forming unit 11, and improve the quality/rigidity of the final rigid cellulose product 2. In the product forming unit 11 the cellulose blank 10 is heated to a forming temperature T in the range 120 - 200 °C in order to obtain adequate rigidity and strength in the final cellulose product 2, preferably in the range 150-180 °C.

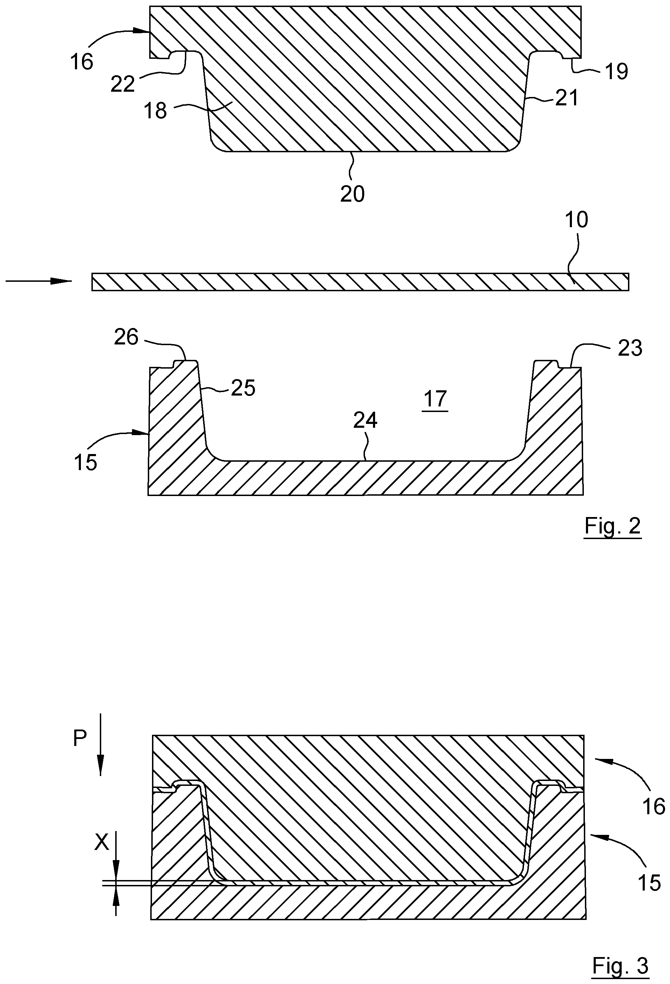

Reference is now made to figures 2-4. The press unit 13 comprises a moulding tool having a first mould part 15 and a second mould part 16 having co-operating designs, wherein at least one of the first mould part 15 and the second mould part 16 is/are displaceable in the axial direction in relation to each other, i.e. reciprocating back and forth in relation to each other, in order to exert pressure to the cellulose blank 10 loaded therebetween. In the figures the mutual displacement is disclosed as being vertical, however the mutual displacement may be horizontal or any other suitable angle. The cellulose blank 10 loaded into the moulding tool, is constituted by the air-laid cellulose blank 10. The air-laid cellulose blank 10 may be generated upstream the product forming unit 11 in the same apparatus/production line and provided/transferred to the product forming unit 11, or may be generated at a separate location and provided/transferred to the product forming unit 11 via intermediate handling and storage.

According to various embodiments the first mould part 15 of the moulding tool is a female mould part, i.e. having a main recess 17 for receiving a major part of the cellulose blank 10, and the second mould part 16 of the moulding tool is a male mould part, i.e. having a main protrusion 18 for cooperation with said recess 17 of the female mould part by being inserted therein, such that the cellulose blank 10 is pressed into a final rigid non-flat shape by applying a predetermined forming pressure P in the axial direction of the moulding tool. According to the disclosed embodiment the male mould part 16 is located above the female mould part 15, but according to alternative embodiments the female mould part may be the second mould part and may be located above the male mould part which is then the first mould part. The pressed cellulose product 2 is intended to remain in/on the first mould part 15 after the pressing of the cellulose product 2, irrespective of the angular orientation of the moulding tool.

The male/second mould part 16 comprises a product press-surface and a scrap press-surface 19 adjacent said product press-surface. In the disclosed example embodiment, the product press-surface of the second mould part 16 comprises a bottom surface 20, a wall surface 21 connected to the bottom surface 20 and extending essentially in the axial direction, and a brim surface 22 connected to the wall surface 21 and extending essentially in the transversal/radial direction. The female/first mould part 15 comprises a product press-surface and a scrap press-surface 23 adjacent said product press-surface. In the disclosed example embodiment, the product press-surface of the first mould part 15 comprises has a bottom surface 24, a wall surface 25 connected to the bottom surface 24 and extending essentially in the axial direction, and a brim surface 26 connected to the wall surface 25 and extending essentially in the transversal/radial direction. The product press-surface of the first mould part 15 and the product press-surface of the second mould part 16 are arranged opposite each other, and the scrap press-surface 23 of the first mould part 15 is arranged opposite the scrap press-surface 19 of the second mould part 16. According to alternative embodiments, the moulding tool does not comprise scrap press-surfaces, i.e. the moulding tool comprises only product press-surfaces and is configured to press/form a cellulose product in its final shape without need for trimming off scrap material.

The cellulose blank 10 is pressed between the surfaces of the male/second mould part 16 and the surfaces of the female/first mould part 15 into final shape. The mutual distance, taken perpendicular to the surface in question, between the product press-surface of the first mould part 15 and the product press-surface of the second mould part 16 during the pressing of the cellulose blank 10 into a cellulose product 2 is X millimetres, wherein X preferably is in the range 0,2-3,0 millimetres, i.e. equal to the thickness of the bottom 6 of the pressed cellulose product 2. Preferably, X is in the range 0,25-1,5 millimetres. The wall surfaces 21, 25 of the moulding tool has to be inclined in order to obtain a release angle for the cellulose product 2, and in order to obtain adequate press force to the wall region 3 of the cellulose product 2.

At a scrap area of the moulding tool, the mutual distance between the scrap press-surface of the first mould part 15 and the scrap press-surface of the second mould part 16 is equal to or more than the mutual distance between the product press-surface of the first mould part 15 and the product press-surface of the second mould part 16. The part of the cellulose blank 10 located at the scrap area may be left entirely uncompressed in the moulding tool, be partially compressed by applying a predetermined partial pressure less than said predetermined forming pressure P, or be fully compressed by applying said predetermined forming pressure P. Thus, radially outside the final rigid cellulose product 2, the cellulose blank 10 comprises a scrap area intended to be cut off. In figure 4 the cellulose product 2 is released and schematically removed from the moulding tool by opening the moulding tool. Figure 5 disclose a schematic illustration of a cellulose tray 2 wherein the scrap 27 is cut off from the cellulose tray 2. According to various embodiments, the scrap 27 may be removed in a separate step in the moulding tool, in a subsequent step outside the moulding tool after the pressing of the cellulose product 2, or in a step concurrent with the pressing of the cellulose product 2.

According to various embodiments. When the compartment of the rigid cellulose tray 2 is filled with objects, a film/cover/lid may be attached to the circumferential rim/brim 5 of the cellulose tray 2, for instance using heat lamination. The lid film may be constituted by a multilayer film comprising polymer, metal, and/or paper.

According to various embodiments. Before any items are placed in the compartment of the rigid cellulose tray, the rigid cellulose tray 2 may be provided with a liner film adhered to at least to the circumferential rim/brim 5, and preferably also to the wall 3 and/or the bottom 6 of the cellulose tray 2. The liner film may be constituted by a multilayer film comprising polymer and/or metal. The adhesion of the liner film to the tray is preferably heat activated.

According to various embodiments, the cellulose blank 10 may comprise barrier additives and/or material property enhancing additives, etc., such that the rigid cellulose tray 2 withstand grease, fat, water, vapour, etc. The additives are preferably provided to the cellulose fibers upstream the disintegrating unit 8 or between the disintegrating unit 8 and the product forming unit 11.

The predetermined forming pressure P is in the range 40-10000N/cm², preferably in the range 100-4000N/cm². According to various embodiments said predetermined pressures are above 500 N/cm², and according to various embodiments said predetermined pressures are below 2500 N/ cm². The holding time during the pressing step is in equal to or more than 0,5 seconds and equal to or less than 10 seconds, preferably less than 5 seconds, and most preferably less than 3 seconds.

According to various embodiments, the moisture content of the cellulose blank 10 provided into the moulding tool is in the range 5-20 wt%, preferably in the range 6-15 wt%. A too low moisture content entails that the internal bonding in the thermoformed/pressed cellulose product 2 are not strong enough and the risk of blistering/delamination of the cellulose product 2 during opening of the moulding tool is increased. A too high moisture content entails that the amount of water that is heated is increased and the risk of steam explosion/expansion during opening of the moulding tool is increased.

In addition to moisture content, some liquid additives will also increase the risk of blistering/delamination. Such liquid additives may for instance be configured for providing barrier properties to the cellulose product and/or for providing increased mouldability by providing reduced internal bonding strength of the cellulose blank to prevent crack formation of the pressed cellulose product. Thus, when using such liquid additives the present invention is crucial to obtain undamaged cellulose products, i.e. prevent blistering/delamination.

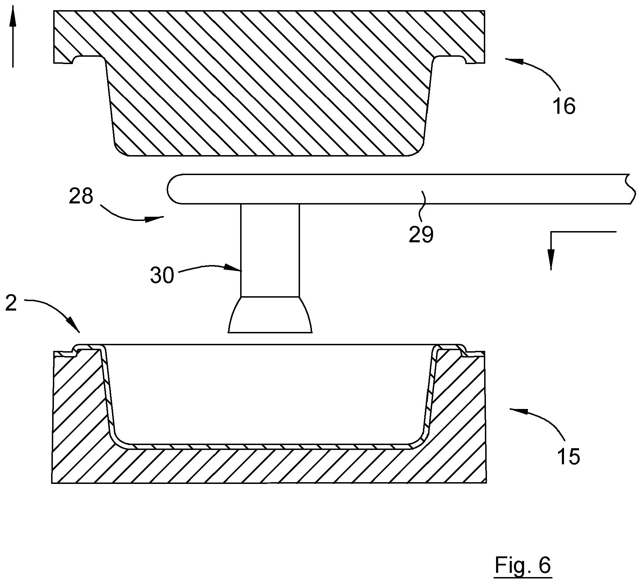

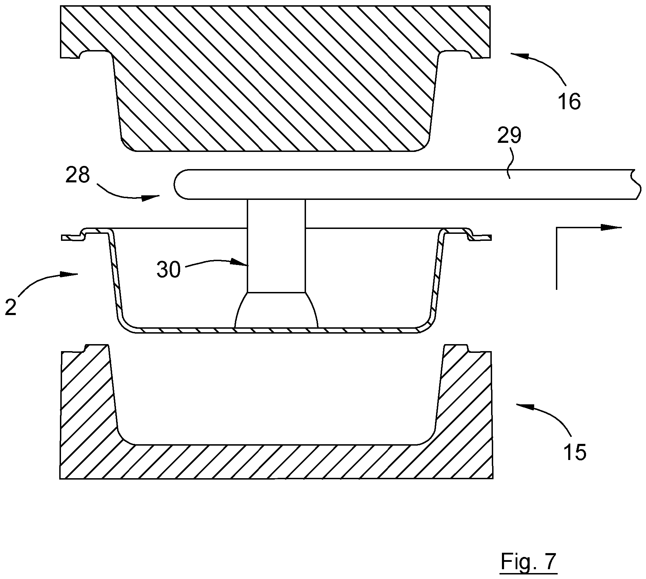

Reference is now made to figures 6 and 7, disclosing a schematic embodiment to remove the pressed cellulose product 2 from the moulding tool.

Figures 6 and 7 disclose the moulding tool and an out-feed device, generally designated 28 and schematically illustrated. The out-feed device 28 is configured to remove the pressed cellulose product 2 from the moulding tool in order to make the moulding tool empty and ready for the loading of the next cellulose blank 10. Thus, part of the out-feed device 28 is insertable into the moulding tool between the male/second mould part 16 and the female/first mould part 15 after the pressing of the cellulose blank 10. Thus, the pressed cellulose product 2 is intended to be located in/on the first mould part 15 after the pressing of the cellulose blank 10, and after the moulding tool is opened. Thereto, the out-feed device 28 may be arranged to transfer the pressed cellulose product 2 to a subsequent step in the apparatus such as trimming of the scrap 27 and/or stacking. According to the invention, the out-feed device 28 makes use of a pneumatic arrangement to grasp/engage and release the cellulose product 2. The out-feed device 28 comprises a movable arm 29 that is mechanically controlled and operated, e.g. a robotic arm, and a suction device 30 connected to the arm 29. The suction device 30 is insertable into the moulding tool between the male/second mould part 16 and the female/first mould part 15, and the suction device 30 is preferably inserted into the moulding tool during the opening of the moulding tool, i.e. when the male mould part 16 and/or the female mould part 15 are traveling away from each other after the pressing of the cellulose blank 10. By starting the insertion of the suction device 30 already before the moulding device is fully open, the press-cycle time may be decreased, i.e. as long as the different members does not collide. A low pressure level entails that the suction device 30 engage/holds the cellulose product 2, and a high pressure level entails that the suction device 30 ejects/drops the cellulose product 2. Alternatively, normal/ambient air pressure is used in order to drop the cellulose product 2.

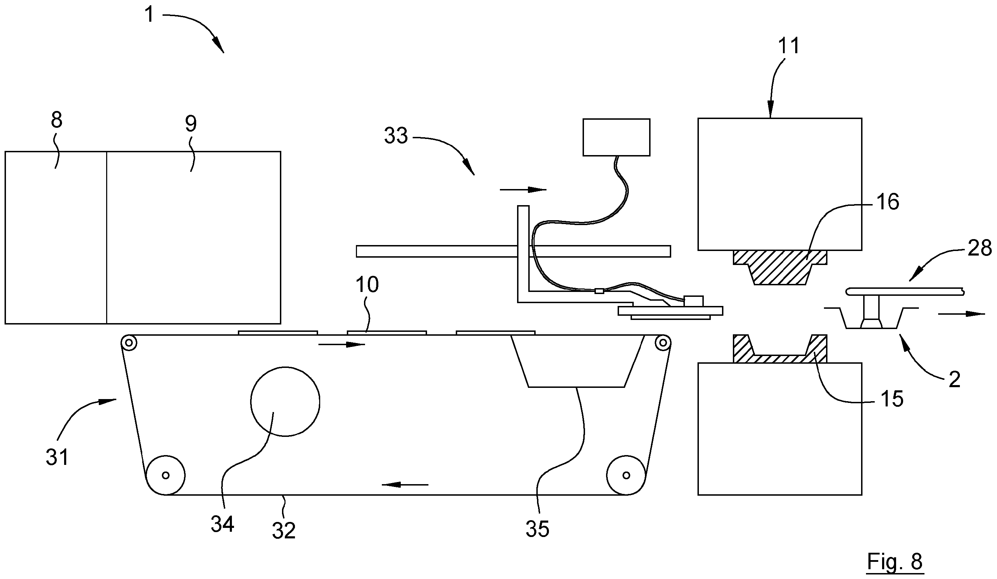

Reference is now made to figure 8 disclosing a schematic illustration of the apparatus 1 for dry manufacturing rigid cellulose products 2, the apparatus 1 comprising an inventive product forming unit 11.

The apparatus 1 comprises a conveyor arrangement, generally designated 31. The conveyor arrangement 31 is configured to receive cellulose blanks 10 in a continuous stream from the cellulose blank forming unit 9, and transporting the continuous stream of cellulose blanks 10 in a transport direction towards the product forming unit 11. The separating/disintegrating unit 8 and the cellulose blank forming unit 9 are schematically disclosed, at the upstream end of the conveyor arrangement 31. According to alternative embodiments the cellulose blanks 10 are provided to the conveyer arrangement 31 from an intermediate storage, manually or automatically.

The conveyor arrangement 31 comprises an endless conveyor belt 32 that is continuously moving during operation of the apparatus 1, and has a predetermined traveling speed in the transport direction of the conveyor arrangement 31. The traveling speed of the conveyor belt 32 is preferably adjustable, and is adjusted in consensus with the cycle rate of the product forming unit 11, and also in consensus with the cycle rate of the cellulose forming unit 9 when applicable. The traveling speed of the conveyor belt 32 is also dependent on the size of the cellulose blanks 10 in relation to the size of the mutual gap between the cellulose blanks 10.

The apparatus 1 further comprises an in-feed device, generally designated 33, configured for transferring the cellulose blank 10 from the conveyor arrangement 31 and loading the cellulose blank 10 into the moulding tool that is open and empty. The in-feed device 33 preferably comprises a suction device configured to engage and transfer the cellulose blank 10 from the continuously moving conveyor belt 32 into the open moulding tool. The suction device of the in-feed device 33, in the transport direction of the conveyor arrangement 31, is moved in conformity with the traveling speed of the conveyor belt 32 during engagement with the cellulose blank 10. Thus, the suction device has the same speed as the cellulose blank 10 when the suction device contacts and grasps/engage the cellulose blank 10. About the same time as the in-feed device 33 engages the cellulose blank 10, the preceding press cycle in the product forming unit 11 is finished and the moulding tool of the product forming unit 11 is opened.

In figure 8, the in-feed device 33 transfers the cellulose blank 10 into the moulding tool, and concurrently the pressed cellulose product 2 from the preceding press-cycle is removed from the moulding tool. The suction device of the in-feed device 33 releases the cellulose blank 10 in the open moulding tool, by deactivating the suction device. According to alternative embodiments, the cellulose blank 10 may also be blown off from the suction device in order to secure proper release.

According to various embodiments, the cellulose blank 10 is transferred into contact with the first mould part 15 by means of the suction device before the cellulose blank 10 is released from the suction device. According to various embodiments, the in-feed device 33 may be used to pre-form the cellulose blank 10 into the main recess 17 of the first mould part 15 when releasing the cellulose blank 10 in contact with the first mould part 15. By releasing the cellulose blank 10 in contact with the first mould part 15, the orientation and location of the cellulose blank 10 is under control, which will guarantee an optimal forming of the cellulose product 2 in the moulding tool.

According to various embodiments, the cellulose blank 10 is retained on the continuously moving conveyor belt 32 by means of an air-removing arrangement 34, i.e. a fan, configured to pull the cellulose blank 10 towards the conveyor belt 32, i.e. by means of under-pressure condition. Thereby the orientation and location of the cellulose blank 10 is known and fixed, in relation to the moving conveyor belt 32. However, the air-removing arrangement 34 is not active or reduced at the position the suction device engages the cellulose blank 10 and lifts the cellulose blank 10 from the conveyor belt 32 e.g. by means of a box/partition 35. This part of the conveyor belt 32 is also called pick-up zone. If a too extensive under-pressure is active when lifting the cellulose blank 10 from the conveyor belt 32, the cellulose blank 10 may become damaged, i.e. one segment/layer of the cellulose blank 10 is in engagement with the suction device and one segment/layer of the cellulose blank 10 is still in engagement with the conveyor belt 32.

The inventive method comprises the steps of:
- providing the cellulose blank 10 into the moulding tool between the first mould part 15 and the second mould part 16,
- displacing at least one of the first mould part 15 and the second mould part 16 in the axial direction in relation to each other, towards each other from an open position,
- pressing the heated cellulose blank 10 between the first mould part 15 and the second mould part 16, by applying the forming pressure P in the axial direction of the moulding tool,
- performing a first step of the opening of the moulding tool by decreasing the applied pressure down to a predetermined pressure level P1 in the range 25 - 15 % of said forming pressure P,
- performing a second step of the opening of the moulding tool be decreasing the applied pressure from said predetermined pressure level P1 down to at least 5% of the forming pressure P during a time period equal to or more than 0,1 seconds and equal to or less than 2 seconds,
- performing a third step of the opening of the moulding tool by displacing at least one of the first mould part 15 and the second mould part 16 in the axial direction in relation to each other, away from each other to the open position, and
- removing the cellulose product 2 from the moulding tool.

The inventive product forming unit 11 is configured to perform said method.

The essential features of the invention are the steps performed during the opening of the moulding tool after the pressing of the cellulose blank 10, which are performed in order to prevent steam explosion/expansion of water vapor and in order to prevent blistering/delamination of the cellulose product 2.

By performing a controlled relief/unloading of the forming pressure P after the pressing of the cellulose blank 10, i.e. the first and second steps of the opening, the water vapor/steam will be transported out of the pressed cellulose product 2 and the water vapor is prevented from expanding in an uncontrolled way.

The first step of the opening of the moulding tool can be made quickly. According to various embodiments, the first step of the opening of the moulding tool by decreasing the applied pressure down to said predetermined pressure level P1, is performed during a time period equal to or less than 1 second, preferably equal to or less than 0,3 seconds. The pressure level in the moulding tool is still high enough to prevent the bulk of the water to transit to water vapor/steam.

The second step of the opening of the moulding tool is the most important/crucial step of the inventive method, since it is during this pressure relief/unloading the bulk of the water will transit to water vapor, and this must not be performed too fast. Preferably the second step of the opening is performed during a time period equal to or more than 0,3 seconds. A too long time for the second step of the opening will increase the total cycle time unnecessarily. Preferably the second step of the opening is performed during a time period equal to or less than 1 second.

During the second step of the opening of the moulding tool or during the third step of the opening of the moulding tool, the pressure level is decreased to 0 % the forming pressure P.

According to various embodiments, the step of decreasing the applied pressure from the predetermined pressure level P1 down to at least 5% of the forming pressure P during a time period of at least 0,1 seconds and equal to or less than 1 seconds, entails a displacement of at least one of the first mould part 15 and the second mould part 16 in the axial direction in relation to each other a distance equal to or less than 0,05 millimetres.

### Feasible modifications of the Invention

The invention is not limited only to the embodiments described above and shown in the drawings, which primarily have an illustrative and exemplifying purpose. This patent application is intended to cover all adjustments and variants of the preferred embodiments described herein, thus the present invention is defined by the wording of the appended claims and the equivalents thereof. Thus, the equipment may be modified in all kinds of ways within the scope of the appended claims. Any subject matter falling outside the scope of the claims is provided for information purposes, and for placing the invention into a relevant context.

Throughout this specification and the claims which follows, unless the context requires otherwise, the word "comprise", and variations such as "comprises" or "comprising", will be understood to imply the inclusion of a stated integer or steps or group of integers or steps but not the exclusion of any other integer or step or group of integers or steps.

It shall also be pointed out that it shall be considered understood that features from a specific embodiment disclosed herein can be combined with and/or exchanged by features from another embodiment and the combination obvious, even though not expressly taught, when the combination and/or exchange is possible.

## Claims

1. Method for controlling a product forming unit (11) configured for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a forming pressure P in the axial direction of the moulding tool, the product forming unit (11) further comprising heating means for heating the cellulose blank (10) to a forming temperature T,
the method comprising the steps of:
- providing the cellulose blank (10) into the moulding tool between the first mould part (15) and the second mould part (16),
- displacing at least one of the first mould part (15) and the second mould part (16) in the axial direction in relation to each other, towards each other from an open position,
- pressing the heated cellulose blank (10) between the first mould part (15) and the second mould part (16), by applying the forming pressure P in the axial direction of the moulding tool,
- performing a first step of the opening of the moulding tool by decreasing the applied pressure down to a predetermined pressure level P1 in the range 25 - 15 % of said forming pressure P,
- performing a second step of the opening of the moulding tool be decreasing the applied pressure from said predetermined pressure level P1 down to at least 5% of the forming pressure P during a time period equal to or more than 0,1 seconds and equal to or less than 2 seconds,
- performing a third step of the opening of the moulding tool by displacing at least one of the first mould part (15) and the second mould part (16) in the axial direction in relation to each other, away from each other to the open position, and
- removing the cellulose product (2) from the moulding tool.

2. The method according to claim 1, wherein the step of decreasing the applied pressure from the predetermined pressure level P1 down to at least 5% of the forming pressure P during a time period of at least 0,1 seconds and equal to or less than 1 seconds, entails a displacement of at least one of the first mould part (15) and the second mould part (16) in the axial direction in relation to each other a distance equal to or less than 0,05 millimetres.

3. The method according to claim 1 or 2, wherein the first step of the opening of the moulding tool by decreasing the applied pressure down to said predetermined pressure level P1, is performed during a time period equal to or less than 1 seconds, preferably equal to or less than 0,3 seconds.

4. The method according to any preceding claim, wherein the forming pressure P is in the range 0,4-100 MPa, preferably in the range 5-25 MPa.

5. The method according to any preceding claim, wherein the forming temperature T is in the range 120 - 200 °C, preferably in the range 150-180 °C.

6. The method according to any preceding claim, wherein the moisture content of the cellulose blank (10) provided into the moulding tool is in the range 5-20 wt%, preferably in the range 6-15 wt%.

7. The method according to any preceding claim, wherein the step of pressing the heated cellulose blank (10) is performed during a pressing time duration in the range 0,5-10 seconds, preferably in the range 0,5-5 seconds.

8. The method according to any preceding claim, the first mould part (15) comprises a bottom surface (24) and the second mould part (16) comprises a bottom surface (20), wherein the axial distance between the bottom surface (24) of the first mould part (15) and the bottom surface (20) of the second mould part (16) during the pressing of the heated cellulose blank (10) is in the range 0,2-3 millimetres, preferably in the range 0,25-1,5 millimetres.

9. A product forming unit (11) for dry manufacturing rigid cellulose products (2) having essentially non-flat general shape from a cellulose blank (10), the product forming unit (11) comprising a moulding tool having a first mould part (15) and a second mould part (16), wherein at least one of the first mould part (15) and the second mould part (16) is displaceable in the axial direction in relation to the other in order to press the cellulose blank (10) therebetween into final shape by applying a forming pressure P in the axial direction of the moulding tool, the product forming unit (11) further comprising heating means for heating the cellulose blank (10) to a forming temperature T, wherein the product forming unit (11) is configured to perform the method according to claim 1.
